# EUROPÄISCHE PATENTANMELDUNG

(11) **EP 0 844 478 A1**
(43) Veröffentlichungstag der Anmeldung: **27.05.1998**
(21) Anmeldenummer: 97119953.4
(22) Anmeldetag: 14.11.1997
(51) Int. Cl.: G01N 30/88, G01N 35/08

(54) **Vorrichtung zur automatischen und kontinuierlichen Analyse von Flüssigkeitsproben**

(30) Priorität: 25.11.1996 DE 19648695
(71) Anmelder: Vermes Mikrotechnik GmbH, 99097 Erfurt (DE)
(72) Erfinder: Roscher, Dietrich, Dr.Ing., 99099 Erfurt (DE); Klingner, Holger, 99096 Erfurt (DE); Heun, Peter, 99099 Erfurt (DE); Gebert, Norbert, 99195 Schwansee (DE)
(74) Vertreter: Enders, Hans

(57) **Zusammenfassung**

Eine Vorrichtung zur automatischen und kontinuierlichen Analyse von Flüssigkeitsproben durch Mischen bestimmter Reagenzien mit der gemeinsamen Anordnung von Membranpumpen, Mischkammern, Verbindungskanälen und die Auswertung des Reaktionsergebnisses mit Hilfe geeigneter Sensoren auf einem 100 orientierten Silizium-Wafer mittels einer durch anisotropes Ätzen eingebrachten Struktur. Unmittelbar vor und hinter der Pumpkammer mit trapezförmigem Querschnitt befinden sich Kanäle mit v-förmigem oder trapezförmigem Querschnitt, die einen nichtlinearen Strömungswiderstand darstellen.

## Beschreibung

Die Erfindung bezieht sich auf eine Vorrichtung zur automatischen und kontinuierlichen Analyse von Flüssigkeitsproben durch Mischen bestimmter Reagenzien und die Anordnung von Membranpumpen, Mischkammern, Kanälen und die Auswertung des Reaktionsergebnisses mit Hilfe von geeigneten Sensoren.

Im Stand der Technik sind Einrichtungen bekannt, die für diese Aufgabe die unterschiedlichsten Typen von Pumpen, u. a. auch Membranpumpen, die in einer bestimmten Zeiteinheit eine bestimmte Volumeneinheit fordern und damit das für die chemische Reaktion notwendige Mischungsverhältnis herstellen.

Weiterhin bekannt sind auch Pumpenanordnungen, die besonders kleine Reagenzienmengen mischen. Verwendet werden dabei Herstellungstechnologien, die den Bereich der Mikromechanik zuzuordnen sind. Aktives Element ist eine Mikropumpe, die für die Förderung der Probe oder einer für die Analyse notwendigen Reagens verantwortlich ist. Diese Mikropumpe besteht aus einem Antrieb und einer Ventilanordnung.

In der Schrift /1/ wird als Antrieb eine Membrane in einem Siliziumwafer verwendet, die als ein Piezo-Bimorph-System ausgeführt ist. Die Ventile sind richtungsabhängige pyramidenförmige Strömungswiderstände, die in einem zweiten Siliziumwafer angeordnet sind. Nachteilig ist die Verwendung von zwei positionsgenau zueinander verbundenen Wafern Eine exakte Dosiermenge wird durch Toleranzen nicht erreicht.

Eine andere in /2/ beschriebene Darstellung verwendet als Ventil eine elastische Membran, die zwischen zwei Trägerplatten eingespannt wird. Der Antrieb erfolgt in diesem Fall durch Erhitzen und Verformung.
Nachteilig ist auch hier die Herstellung mehrerer Trägerteile, die positionsgenau zueinander gefügt werden müssen. Das Erhitzen der Membran bedeutet für bestimmte Reagenzien eine Einschränkung. Die Fördermenge ist ebenfalls nur schwer kontrollierbar.

Eine in /3/ beschriebene Anordnung verwendet ebenfalls mehrere, positionsgenau zueinanderzufügende Einzelteile.
Angetrieben wird das System durch elektrostatische Kräfte, die eine Membran verformen. Die Ventile sind als Klappen ausgeführt, die einen richtungsabhängigen Strömungswiderstand erzeugen. Die Fördermenge wird kontrolliert, wobei der Nachteil auch der aufwendige Fertigungsprozeß ist, insbesondere dann, wenn man an eine Anordnung mit einigen Dutzend Pumpen denkt.

Der Erfindung liegt deshalb die Aufgabe zugrunde, eine Vorrichtung zur automatischen und kontinuierlichen Analyse von Flüssigkeitsproben zu schaffen, die durch eine große Anzahl von Pumpen, Ventilen, Misch- und Reaktionskammern in einem gemeinsamen mit hoher Präzision herstellbaren Formteil bestimmt ist.

Diese Aufgabe wird dadurch gelöst, daß in einem 100 orientierten Silizium-Wafer durch anisotropes Ätzen eine Struktur angebracht wird, die zusammen mit einer durch anodisch Bonden aufgebrachten Glasdeckschicht eine Anordnung von Pumpen, Ventilen, Mischkannnern und Reaktoren ergibt.
Die Pumpen verwenden als Antrieb ein Piezo-Bimorph-System, das sich durch Aufbringen einer Piezoplatte oder einer piezoaktiven Schicht auf die Glasdeckschicht oder den Pumpkammerboden ergibt.

Die Pumpkammer ist rechteckig mit trapezförmigem Querschnitt. Unmittelbar vor und hinter der Pumpkammer befinden sich Kanäle mit einem dreieckigen oder trapezförmigem Querschnitt, die einen nichtlinearen Strömungswiderstand darstellen. Die Funktionsweise besteht darin, daß bis zu einer bestimmten Strömungsgeschwindigkeit v eine laminare Strömung vorherrscht und bei Überschreiten dieser Strömungsgeschwindigkeit diese Laminarströmung in eine Turbulenzströmung umschlägt und damit eine sprunghafte Änderung des Strömungswiderstandes eintritt.
Die Geometrie der Zulauf- und Ablaufkanäle ist unterschiedlich, so daß der Einsetzpunkt von linearer und nichtlinearer Strömung unterschiedlich ist. Wird nun die Membran mit einem stetigen Impuls ausgelenkt, dessen Amplitude sich mit der Dauer verändert, sind die Zeitpunkte des Umschlagens der laminaren in eine turbulente Strömung in den Zulauf- und Ablaufkanälen unterschiedlich. Damit ergibt sich über das Zeitmittel ein richtungsabhängiger Strömungswiderstand, der einen Volumenlluß über die gesamte Anordnung bewirkt.
Je nachdem, ob der Impuls über seinen zeitlichen Verlauf ansteigt oder abfällt, ergibt sich ein Volumenlluß in die eine oder andere Richtung. Für die exakte Dosierung der geförderten Flüssigkeitsmenge können im Anschluß an die Pumpkammer Meßkanäle in den Silizium-Wafer eingebracht werden, die einen definierten Strömungswiderstand darstellen. An den beiden Enden des Meßkanals auftretenden Flüssigkeitsdrücke sind ein Maß für die Durchflußmenge durch den Meßkanal.
Die Druckdifferenz kann deshalb als Regelgröße für die Pumpfrequenz oder Pump-amplitude benutzt werden, um eine exakte Fördermenge einzustellen.
Mehrere Pumpen können ausgangsseitig auf eine gemeinsame Kammer wirken, die entsprechend der Herstellungstechnologie der 100 Silizium Wafer ebenfalls rechteckig mit trapezförmigem Querschnitt gestaltet ist. Durch asymmetrischen Einlauf in diese Kammer tritt eine Verwirbelung der verschiedenen Reagenzien auf. Damit wird ein Mischen und eine stabile chemische Reaktion hervorgerufen.

Die Mischkammer kann als gemeinsames Bezugspotential für die Druckmessung oder für die Durchflußmengenmessung benutzt werden. Die Ausgangsseite der Mischkammer wird über einen Kanal mit dem Reaktor verbunden, der ebenfalls v-förmigen oder trapezförmigen Querschnitt besitzt. Die Durchflußgeschwindigkeit und die Kanallänge können so bemessen werden, daß eine ausreichende Reaktionszeit vor der Auswertung der Flüssigkeit durch geeignete Sensoren erfolgt. Damit ist ein quasi kontinuierliches Messen möglich.

Der der Erfindung zugrunde liegende Gedanke wird in der nachfolgenden Beschreibung anhand eines Ausführungsbeispiels, das in der Zeichnung näher dargestellt ist, näher erläutert.

Es zeigt:
- Fig. 1: Gesamtansicht des Analysesystems
- Fig. 2: Analysesystem für mehrere Nachweise
- Fig. 3: Schema für den Mikropumpenaufbau - Draufsicht
- Fig. 4: Schema für den Mikropumpenaufbau - Querschnitt
- Fig. 5: Verlauf der Strömungswiderstände
- Fig. 6: Verlauf der Volumenströme über eine Zeitperiode
- Fig. 7: Regelsystem für Dosiermengen
- Fig. 8: Schema der Mischkammer
- Fig. 9 a: Optische Auswertung des Reaktionsproduktes

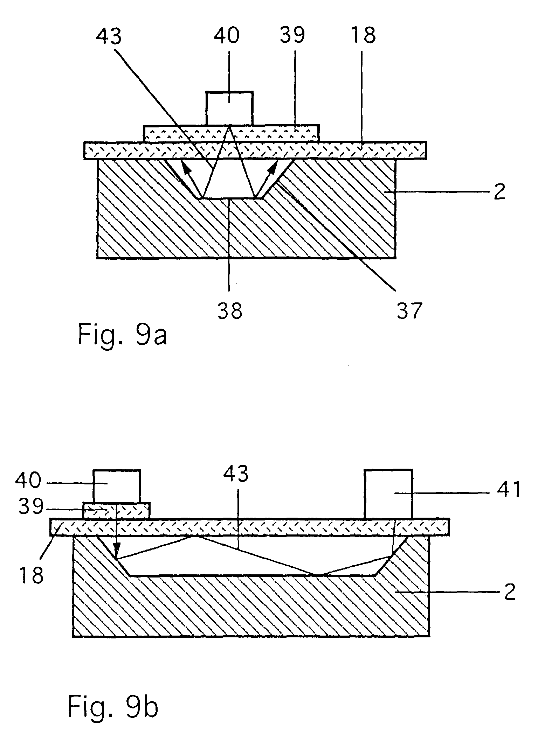

- Fig. 9 b: Seitenansicht nach Fig. 9 a

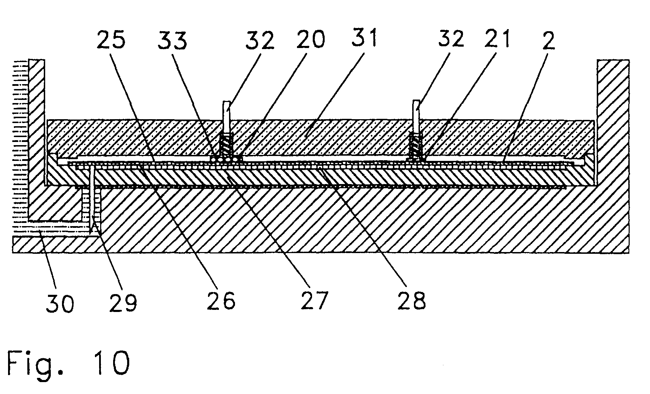

- Fig. 10: Zuführung der Flüssigkeiten - Schnittdarstellung

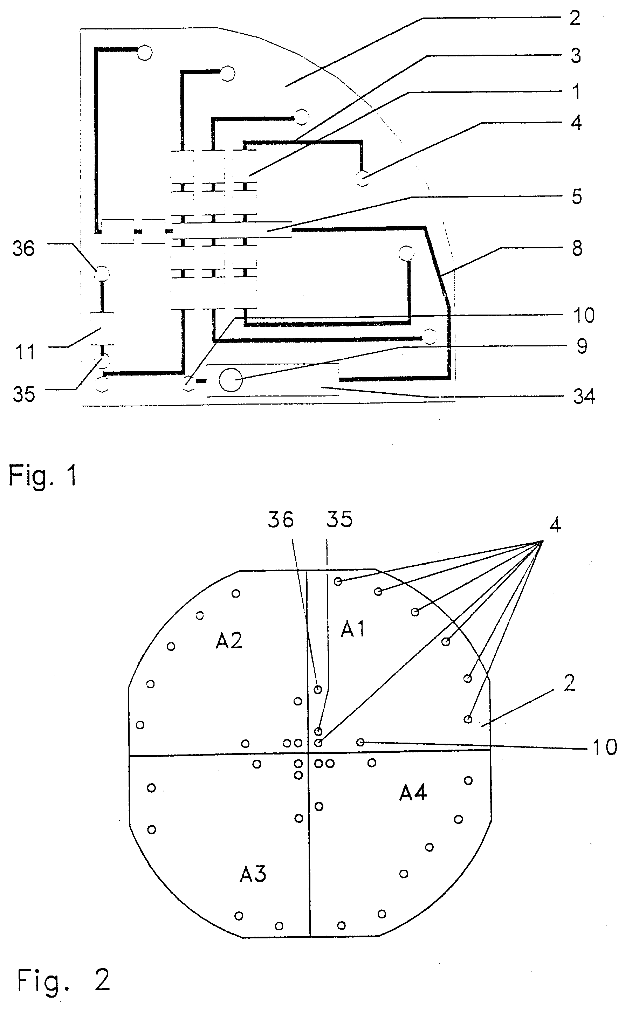

Fig. 1 zeigt das Aufbauprinzip der Anordnung. Mehrere Mikropumpen 1 befinden sich auf einem 100 orientierten Siliziumwafer 2 einer Dicke von ca. 500 µm. Die Mikropumpen 1 sind über Kanäle 3 mit Zulauföffnungen 4 verbunden, über die Probeflüssigkeiten oder Reagenzien zugeführt werden. Die Mikropumpen 1 wirken dabei auf eine Mischkammer 5, in der eine Verwirbelung der eingebrachten Reagenzien erfolgt. Jede der Mikropumpen 1 nimmt eine Fläche von ca. 10 mm² ein, die Verbindungskanäle sind bedingt durch die Eigenschaften des 100 - Siliziums mit dreieckigem Querschnitt und einer Strukturtiefe von ca. 100 µm ausgeführt und an den Knickstellen rechtwinklig. Der Einlaufüber Meßkanal 17 in die ebenfalls rechteckförmige Mischkammer 5 mit trapezförmigen Querschnitt ist zweckmäßigerweise so ausgeführt, daß an der Querseite 6 die Probenflüssigkeit eingeführt wird und an den beiden Längsseiten 7 die zuzusetzenden Reagenzien mit anteilig geringerer Menge eingebracht werden. Von der Mischkammer 5 wird das Mischprodukt über einen relativ langen Reaktionskanal 8 den Auswertesensoren 9 für definierte Flüssigkeitseigenschaften zugeführt, die sich direkt auf dem Siliziumwafer 2 oder in einem anderen Ausführungsbeispiel außerhalb des Siliziumwafer 2 in, Anschluß an den Auslauf 10 befinden. Die Länge des Reaktionskanals 8 bestimmt sich nach der notwendigen Reaktionszeit des Mischproduktes im Zusammenhang mit der Geschwindigkeit des Volumenflusses vor Auswertung mit einem Auswertesensor 9. Weitere Mikropumpen 11 können auf dem Siliziumwafer 2 mit einem gesonderten Zulauf 35 und Ablauf 36 angeordnet werden, uni z. B. in der Peripherie der Anordnung befindliche Systeme mit Flüssigkeit zu versorgen.

Bei Verwendung eines Siliziumwafer mit 4 Zoll Durchmesser (Fig. 2) lassen sich eine Vielzahl von Mikropumpen 1, Mischkammern 5 und Auswertesensoren 9 anordnen, die für verschiedene Typen von Analyseverfahren eingesetzt werden. Im Ausführungsbeispiel werden vier Verfahren A1 bis A4 mit einem einzigen Siliziumwafer 2 realisiert. Jedes Verfahren beansprucht dabei ein Viertel der verfügbaren Fläche. Die Struktur des Analysesystems, wie in Fig. 1 dargestellt, kann dabei universell und redundant ohne wesentlichen Kostennachteil ausgeführt werden. Nicht benötigte Mikropumpen 1 werden in der Zulauföffnung 4 gesperrt.

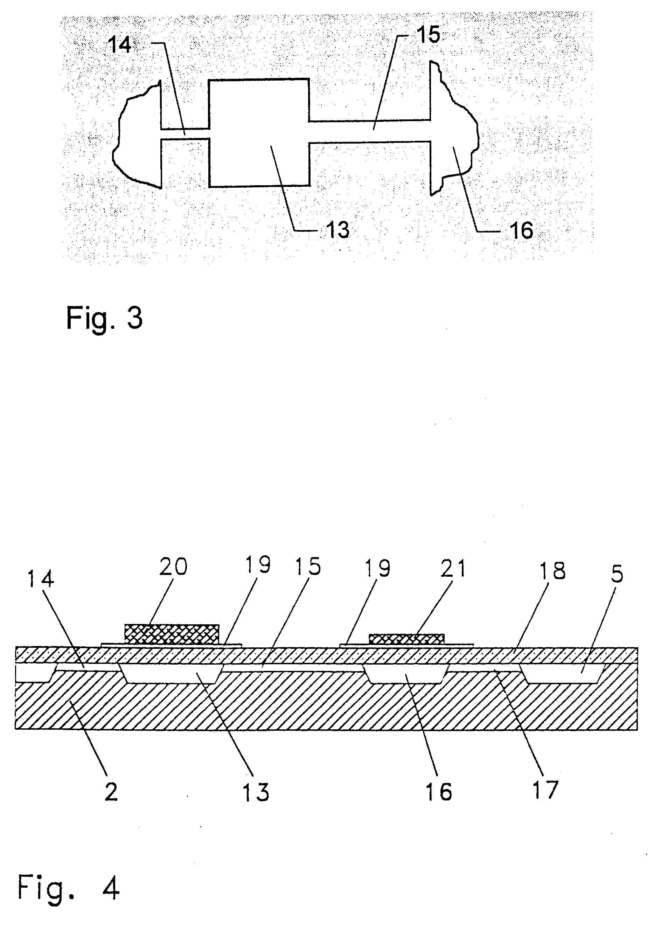

Der Aufbau einer einzelnen Mikropumpe 1 ist in der Draufsicht in Fig. 3 dargestellt. Die eigentliche Pumpkammer 13 ist rechteckig. Zulauf- 14 und Ablaufkanäle 15 besitzen einen unterschiedlichen Querschnitt. Der Ablaufkanal 15 führt in eine weitere Druckmesskammer 16, die zur Druckmessung verwendet wird. Von der Druckmesskammer 16 stellt der Meßkanal 17 die Verbindung zur eigentlichen Mischkammer 5 her. Die Schnittdarstellung in Fig. 4 verdeutlicht den Aufbau des Pumpsystems. Sämtliche Kammern 13, 5 sowie die Verbindungskanäle wie 3, 8, 17 sind mit einer anisotrop ausgeführten Tiefenätzung hergestellt worden. Die gesamte Anordnung wird durch eine Glasdeckschicht 18 von ca. 150 µm Dicke abgedeckt, die durch anodisches Bonden mit dem Siliziumwafer 2 dicht verbunden ist. Auf der Glasdeckschicht 18 befinden sich elektrische Leiterbahnen 19 zur Kontaktietung von Piezoelementen 20. Die auf der Glasdeckschicht 18 aufgeklebten Piezoelemente 20 ergeben zusammen mit der Glasdeckschicht 18 ein Bimorphsystem, das beim Anlegen einer elektrischen Spannung sich verwölbt und damit einen Volumenfluß in der Pumpkammer 13 bewirkt. Auf der Glasdeckschicht 18 sind über den Meßkammern 16 Drucksensoren 21 angebracht, die die in Abhängigkeit vom Druck in der Druckmesskammer 16 auftretende Verwölbung mißt und in ein elektrisch auswertbares Signal umwandelt. Vorteilhaft werden diese Drucksensoren 21 in piezoresistiven Schichten ausgeführt.

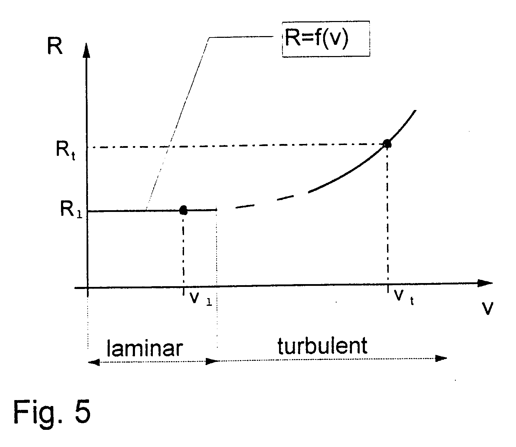

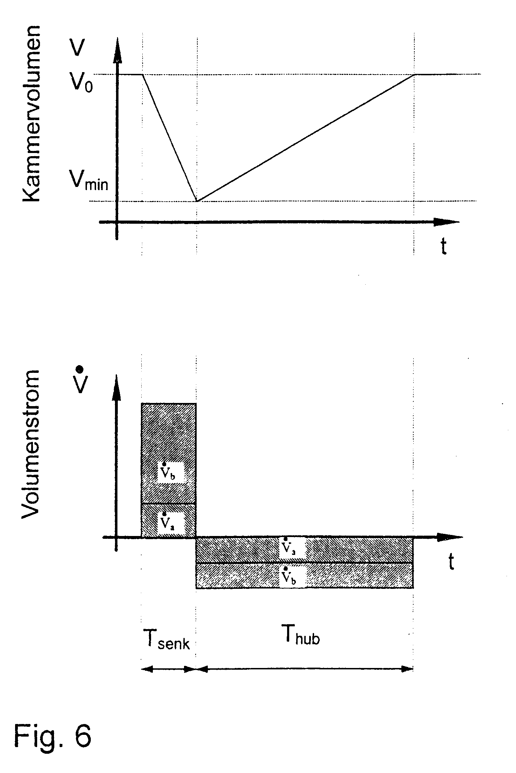

Zulauf- 14 und Ablautkanäle 15 wirken als Strömungswiderstände gegen den Volumenfluß. Die Besonderheit dieser Strömungswiderstände im Mikrobereich besteht darin, daß bei einer bestimmten Strömungsgeschwindigkeit die laminare Strömung in eine turbulente Strömung umschlägt. Der Strömungswiderstand erhöht sich, wie in Fig. 5 dargestellt, sprunghaft von einen Wert Rₗ auf einen Wert Rₜ. Bedingt durch die unterschiedliche Geometrie der Zulauf- 14 und Ablaufkanäle 15 tritt der Übergang von Rₗ auf Rₜ bei unterschiedlichen Strömungsgeschwindigkeiten ein. Wird nun das Piezoelement 20 mit einer relativ steilen Flanke angesteuert, ergibt sich in der Pumpkammer 13 eine schnelle Volumenänderung, die einen Fluidstrom mit einer hohen Geschwindigkeit führt. Im Zulaufkanal 14 mit einem geringeren Querschnitt führt dieser Fluidstrom zu einer sprunghaften Widerstandserhöhung, während der Strömungswiderstand im Ablaufkanal 15 weitgehend konstant bleibt. Der in der Pumpkammer 13 erzeugte Fluidstrom teilt sich entsprechend den Strömungswiderständen unterschiedlich auf Der größere Anteil fließ im Ausführungsbeispiel nach Fig. 3 durch den Ablaufkanal 15. Die Rückstellung des aus Piezoelement 20 und Glasdeckschicht 18 gebildeten Bimorphs erfolgt mit einer relativ flachen Impulsflanke. Die Volumenänderung in der Pumpkammer 13 ist entsprechend langsam. Es wird vermieden, daß die Strömung im Zulaufkanal 14 turbulent wird, so daß auch hier der Strömungswiderstand nahezu konstant bleibt. Damit ist die Aufteilung des Volumenflusses eine andere, als bei schneller Volumenänderung der Pumpkammer 13, obwohl auch hier der größere Anteil des Volumenstroms, allerdings mit umgekehrten Vorzeichen durch den Ablaufkanal 15 fließt. Über die Gesamtlänge eines sägezahnförmigen Ansteuerimpulses ergibt sich aber, wie in Fig. 6 dargestellt, eine vorherrschende Richtung des Fluidstroms, daß gleichbedeutend mit einer Pumpwirkung ist.

Der Meßkanal 17 ist so dimensioniert, daß der Übergang zu einer turbulenten Strömung in jedem Fall nicht erfolgt. Damit ergibt sich in Abhängigkeit vom Volumenstrom eine Druckdifferenz, die gleichzeitig ein Maß für die Durchflußmenge ist. Eine speziell ausgeführte Druckmeßkammer 16 registriert die Verwölbung der Glasdeckschicht 18. Die dem Meßkanal 17 folgende Mischkammer 5 besitzt ebenfalls auf der Glasabdeckung 18 einen, die Verwölbung registrierenden Drucksensor 21, so daß zwei, die Druckdifferenz repräsentierenden Signale 22 und 23 zur Verfügung stehen.

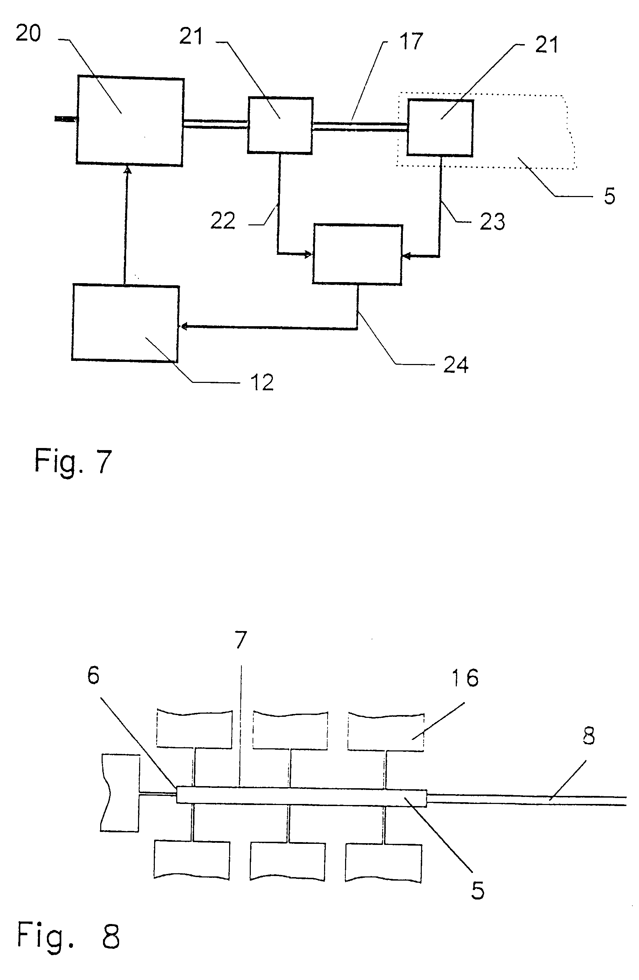

Wie in Fig. 7 dargestellt, werden diese beiden Signale 22 und 23 miteinander verglichen, das entstehende Differenzsignal 24 wird in ein Signal umgeformt, das einem Stellglied 12 für die Leistung der Mikropumpe 1 zugeführt wird. Das Differenzsignal 24 erzeugt dazu eine Veränderung der Spannungsamplitude oder der Frequenz des am Piezoelement 20 angelegten Signals. Es entsteht so ein Regelkreis, der eine exakte Dosierung der Reagenzien für den Analyseprozeß auch unter wechselnden Umgebungsbedingungen zuläßt.

Fig. 8 zeigt den Aufbau einer Mischkammer 5, in die im Ausführungsbeispiel der Probe bis zu sechs verschiedene Reagenzien zugesetzt werden können.

Es ist vorteilhaft, bei der Auswertung von optischen Eigenschaften ebenfalls die dafür notwendigen Küvetten in den Siliziumwafer 2 zu integrieren. Fig. 9 zeigt ein Ausführungsbeispiel, bei dem die Ein- und Auskopplung von Licht einer lichtemmitierenden Diode 40 in einen Küvettenkanal 42 zwecks Ermittlung der Extinktion des Reaktionsproduktes erfolgt. Genutzt wird dabei die Reflektion an den schrägen Kammerwänden 37, am Kammerboden 38 und an der Glasdeckschicht 18. Eine spektrale Selektivität kann durch Einschalten von Spektralfiltern 39 beispielsweise Interferenzfilter in den Strahlengang erreicht werden. Die Messung des Lichtes erfolgt durch ein Fotoelement 41, das vorzugsweise als Fototransistor ausgeführt ist.

Für die gesamte Anordnung des Analysesystems ist es zweckmäßig, die Oberseite 25 des Siliziumwafer 2 für die Kontaktierung der elektrischen Signale zu benutzen, die Unterseite 26 des Wafers dagegen für die Zuführung der Probe bzw. der Reagenzien. Wie in Fig. 10 dargestellt wird, ist dazu der Wafer 2 auf einen Chipträger 27 montiert z. B. durch Verkleben 28. Der Chipträger erhält wie in Fig. 10 gezeigt wird, mechanisch fest eingefügte Kanülen 29, die mit entsprechenden Vorratsbehältern 30 verbunden sind. Auf der Oberseite des Siliziumwafer 2 befindet sich eine mit einem Kleinen Abstand angeordnete Trägerplatte 31 für die elektrischen Kontakte 32, die federnd auf die Kontaktflächen 33 der Piezoelemente 20 oder der Drucksensoren 21 einwirken. Auf diese Weise wird der empfindliche Siliziumwafer 2 geschützt. Die gesamte Anordnung erlaubt dadurch einen Betrieb unter robusten Umgebungsbedingungen.

Vorstehend ist die Erfindung anhand ausgewählter Merkmale beschrieben und dargestellt worden. Selbstverständlich ist die Erfindung nicht auf diese Darstellung beschränkt, sondern können sämtliche Merkmale allein oder in beliebiger Kombination, auch unabhängig von ihrer Zusammenfassung in den Ansprüchen, verwendet werden.

### Literatur:

- /1/: Gerlach, Wurmus,
TU Ilmenau Design Cousiderations on the Dynamic Micropump ACTUATOR 96, sth Intern-Conference o New Actuators, 26 - 28 Juni 1996, Bremen
- /2/: Bustgens, Bacher, Bier, Ehnes Keydel
Mikrostrukturtechnik
ACTUATOR 96, sth Intern-Conference o New Actuators, 26 - 28 Juni 1996, Bremen
- /3/: Temmel, Hermes, Kluge, Woias
ACTUATOR 96, sth Intern-Conference o New Actuators, 26 - 28 Juni 1996, Bremen

## Patentansprüche

1. Vorrichtung zur automatischen und kontinuierlichen Analyse von Flüssigkeitsproben durch Mischen mit verschiedenen Reagenzien mit Hilfe einer Anordnung von Mikropumpen, Mischkammern, Reaktoren und Sensoren **dadurch gekennzeichnet,** daß die Mikropumpen (1), Mischkammern (5) Reaktionskanäle (8) und Verbindungskanäle (14), (15), (17), in einem gemeinsamen, in seiner Kristallgitterstruktur 100 orientierten Siliziumwafer (2) angeordnet sind, deren Strukturierung durch anisotropes Ätzen eingebracht ist, die strömungswirksamen Querschnitte eines oder mehrerer Zulaufkanäle (14) in die Pumpkammer (13) unterschiedlich zum strömungswirksamen Querschnitt des Ablaufkanals (15) aus dieser Pumpkammer (13) sind und der Siliziumwafer (2) durch eine Deckschicht (18) verschlossen ist.

2. Vorrichtung nach Anspruch 1, **dadurch gekennzeichnet,** daß die Mikropumpen (1) aus rechteckigen Pumpkammern (13) mit trapezförmigen Quer-schnitt, einer Deckschicht (18), einem Piezoelement (20), einem Zulaufkanal (14) und einem Ablaufkanal (15) mit unterschiedlichen Strömungswiderständen bestellen.

3. Vorrichtung nach Anspruch 1 und 2, **dadurch gekennzeichnet,** daß die Strömung im Zulaufkanal (14) zwischen einer laminaren Strömung und einer turbulenten Strömung gesteuert ist.

4. Vorrichtung nach Anspruch 1 bis 3, **dadurch gekennzeichnet,** daß die Druckmeßkammer (16) über den Ablaufkanal (15) mit der Pumpkammer (13) und über den Meßkanal (17) mit der Mischkammer (5) verbunden ist, über der Druckmeßkammer (16) und der Mischkammer (5) jeweils ein Drucksensor (21) angeordnet ist, die das Differenzsignal für das Stellglied (12) der Pumpe (1) liefern.

5. Vorrichtung nach Anspruch 1 bis 4, **dadurch gekennzeichnet,** daß die Mischkammer (5) mit mehreren Mikropumpen (1) verbunden ist.

6. Vorrichtung nach Anspruch 1 bis 5, **dadurch gekennzeichnet,** daß zwischen der Mischkammer (5) und dem Auswertesensor (9) ein Reaktionskanal (8) angeordnet ist.

7. Vorrichtung nach Anspruch 1 bis 6, **dadurch gekennzeichnet,** daß der Siliziumwafer (2) in den Chipträger (27) eingebettet ist, über den die Einleitung der Probeflüssigkeit und der Reagenzien erfolgt.

8. Vorrichtung nach Anspruch 1 bis 7, **dadurch gekennzeichnet,** daß über dem Siliziumwafer (2) eine Trägerplatte (31) angeordnet ist, in der sich federnde elektrische Kontakte befinden, die die Kontaktflächen der Piezoelemente (20) und Drucksensoren (21) berühren.

9. Vorrichtung nach Anspruch 1 und 2, **dadurch gekennzeichnet,** daß die Deckschicht für den Siliziumwafer (2) als Glasdeckschicht (18) ausgeführt und durch anodisches Bonden mit dem Siliziumwafer (2) verbunden ist.

10. Vorrichtung nach Anspruch 1 und 2, **dadurch gekennzeichnet,** daß auf der Glasdeckschicht (18) eine lichtemmitierende Diode (40) und ein Fotoelement (41) in Kontakt aufgebracht ist und das im Siliziumwafer (2) ein Küvettenkanal (42) eingeätzt ist.
